# EUROPÄISCHE PATENTSCHRIFT

(11) **EP 3 573 502 B1**
(45) Veröffentlichungstag und Bekanntmachung des Hinweises auf die Patenterteilung: **27.01.2021**
(21) Anmeldenummer: 18706951.3
(22) Anmeldetag: 23.01.2018
(51) Int. Cl.: A47G 19/22, B65D 47/24, B65D 47/32

(54) **TRINKFLASCHENVERSCHLUSS, INSBESONDERE FÜR EINE ISOLIERFLASCHE**
DRINKING BOTTLE CLOSURE, IN PARTICULAR FOR AN INSULATED BOTTLE
FERMETURE DE GOURDE, EN PARTICULIER POUR UNE BOUTEILLE ISOLANTE

(30) Priorität: 25.01.2017 DE 202017100395 U
(43) Veröffentlichungstag der Anmeldung: 04.12.2019
(73) Patentinhaber: Emsa GmbH, 48282 Emsdetten (DE)
(72) Erfinder: HORSTMANN, Klaus, 48485 Neuenkirchen (DE)
(74) Vertreter: SEB Développement
(86) Internationale Anmeldenummer: PCT/DE2018/100049
(87) Internationale Veröffentlichungsnummer: WO 2018/137734

(56) Entgegenhaltungen:
- EP-A2- 2 359 722
- WO-A2-2005/089060
- DE-U1-202006 017 689
- DE-U1-202009 014 339

## Beschreibung

Die Erfindung betrifft einen Trinkflaschenverschluss, insbesondere für eine Isolierflasche, mit den Merkmalen des Oberbegriffs des Anspruchs 1.

Bei diesem Typ von Trinkflaschenverschluss, wie er in der DE 20 2006 017 689 U1 dargestellt ist, ist ein Hebelelement vorgesehen, das gelenkig auf der Oberseite des Gehäuses gelagert ist und das im Bereich seiner Lagerung exzentrische Zapfen aufweist. Diese sind mit einer Zugstange gekoppelt, an deren Ende eine Dichtplatte hängt. Mit der Schwenkbewegung des Hebelelements wird die Dichtplatte von Ihrem Dichtsitz gelöst oder daran angepresst,

Durch die exzentrische Kopplung des Hebels mit der Zugstange der Dichtplatte kann eine hohe Anpresskraft der Dichtplatte an ihrem Dichtsitz erreicht werden, ohne dass der Benutzer eine hohe Kraft aufwenden muss. Damit wird ein zuverlässiger Verschluss erreicht, auch wenn eine Trinkflasche, auf die ein solcher Trinkflaschenverschluss aufgesetzt ist, in liegender Stellung transportiert wird. Probleme können jedoch bestehen, wenn sich im Inneren der Trinkflasche ein Druck aufgebaut hat. Wenn dann der Verschluss geöffnet wird, kann es dazu kommen, dass Flüssigkeit durch den Luftkanal nach außen schießt.

Die Aufgabe der vorliegenden Erfindung besteht somit darin, bei einem Trinkflaschenverschluss der eingangs genannten Art beim Öffnen einen Druckausgleich zu ermöglichen, aber zugleich das Entweichen von Flüssigkeit über die Belüftungswege zu vermeiden. Weiterhin soll beim Trinken über den Trinkflaschenverschluss eine gute Belüftung sichergestellt sein, um ein gleichmäßiges Ausfließen der Flüssigkeit zu ermöglichen.

Zur Lösung dieser Aufgabe wird ein Trinkflaschenverschluss mit den Merkmalen des Anspruchs 1 vorgeschlagen, der zwei wesentliche Mittel vorsieht:
- eine feinfühlige Belüftungssteuerung über einen zentralen Luftkanal, in welchem zugleich die Achse des Dichtungselements axial beweglich gelagert ist und
- ein Schwallschutzelement, das den Luftkanal und seine Mündung umgibt und somit verhindert, dass Flüssigkeit darüber nach außen spritzen kann.

Das Schwallschutzelement, erstreckt sich zwischen einer inneren Zylinderwand, welche den Luftkanal und die Führung für das Zwischenelement und das damit verbundene Dichtungselement bildet, und der äußeren Wandung, welche den Auslaufraum begrenzt. Es verläuft überwiegend um die Luftkanalwandung herum. In dem Bereich jedoch, der der Auslauföffnung gegenüberliegt, teilt sich das Schwallschutzelement in zwei parallele Wände auf, die zwischen sich einen Tunnel ausbilden, also einen Weg, über den Luft strömen kann.

Das Schwallschutzelement verhindert, dass beim Öffnen Flüssigkeit in die Luftwege mitgerissen wird, falls vor der Öffnung ein Überdruck im Behälterinneren bestanden hat. Hierzu schirmt es nicht nur großflächig den Luftkanal vom Auslaufraum ab, sondern wirkt mit dem Dichtteller so zusammen, so dass dort im Moment der Öffnung zwar eine luftleitende Verbindung geöffnet wird, aber evtl. mitgerissene Flüssigkeit umgelenkt wird. Die seitliche Abschirmung des Luftraums im Inneren des Schwallschutzelements sorgt dafür, dass beim Druckausgleich beschleunigte Flüssigkeitsportionen nicht in den Luftweg gelangen können. Es wird also keine vollständige Flüssigkeitsdichtung erzielt, da damit auch eine Luftdichtigkeit verbunden wäre, sondern es wird lediglich eine mechanische Abschirmung für die beschleunigten Flüssigkeitsteile im oberflächennahen Bereich bewirkt. Da die Flüssigkeitsportion ihre kinetische Energie an dem Schwallschutzelement verliert, kann sie auch nicht mehr gegen die Gewichtskraft durch die verbleibenden Spalte und mehreren Umlenkungen folgend zur Außenseite des Gehäuses gelangen.

In der Trinkstellung wird durch das Schwallschutzelement verhindert, dass Flüssigkeit in den Luftkanal hinein schwappen kann. Zugleich wird durch den Tunnel oder Schacht eine Luftverbindung zur Außenseite des Gehäuses hergestellt, um Luft nachströmen zu lassen, während Flüssigkeit ausläuft.

Dazu ist insbesondere ein erhabener Absatz am Dichtteller des Dichtungselements vorgesehen, die in den von dem Schwallschutzelement umfassten Innenraum hineinragt, solange die Öffnungsstellung noch nicht erreicht ist. Sollte Flüssigkeit aufgrund eines Druckausgleichs mitgerissen werden, kann sie durch den schmalen Spalt zwischen dem Rand des Schwallschutzelements und dem Absatz am Dichtteller nur so gelangen, dass sie in den Zwischenraum zwischen Luftkanal und Schwallschutzelement gelangt, aber nicht in den Luftkanal selber.

Zudem ist dieser durch ein zusätzliches Innendichtungselement abgeschirmt, das auf die Achse des Dichtungselements oder den Schaft des Zwischenelements aufgezogen ist. Vorzugsweise ist eine schräg nach unten angestellte Dichtlippe vorhanden. Beim Öffnen wird diese Dichtlippe leicht aus dem Luftkanal herausgeschoben, liegt dann aber am unteren Rand des Luftkanals locker an. Im Fall eines Überdrucks im Innenraum wird die Dichtlippe stärker an den Rand des Luftkanals gedrückt und dichtet diesen ab. Beim weiteren Öffnen gelangt das Innendichtungselement aus dem Luftkanal heraus und entfaltet sich wie ein Dichtschirm. Auch wenn dann keine dichte Verbindung mehr besteht, so wird immer noch eine mechanische Abschirmung erreicht.

Weitere vorteilhafte Ausgestaltungen der Erfindung werden unter Bezug auf das in den Figuren dargestellte Ausführungsbeispiel nachfolgend beschrieben. Die Figuren zeigen im Einzelnen:
- Figur 1: einen Trinkflaschenverschluss in perspektivischer Ansicht von außen;
- Figur 2a: den Trinkflaschenverschluss von schräg unten;
- Figur 2b: den Trinkflaschenverschluss von schräg unten, mit abgenommenem Dichtungselement;
- Figur 3, 4: den Trinkflaschenverschluss in Schließstellung in zwei um 90° zueinander gedrehten Querschnitten;
- Figur 5, 6: den Trinkflaschenverschluss in Öffnungsstellung in zwei um 90° zueinander gedrehten Querschnitten; und
- Fig. 7: den Trinkflaschenverschluss in gekippter Trinkstellung, im Querschnitt.

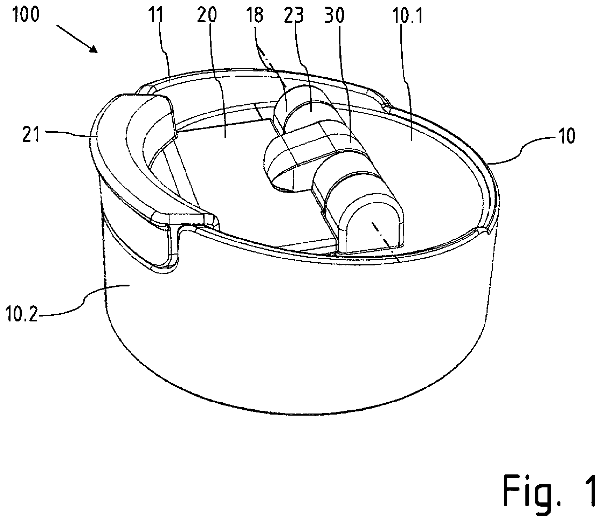

In Figur 1 ist ein Trinkflaschenverschluss 100 dargestellt, der ein Gehäuse 10 und ein Hebelelement 20 umfasst. Das Gehäuse 10 ist rund ausgebildet, sodass es auf einen Flaschenhals einer Trinkflasche aufgesetzt, insbesondere aufgeschraubt, werden kann. Es besitzt eine umlaufende Außenwand 10.2, die insbesondere zylindrisch ist, und ist nach oben durch einen Deckel 10.1 abgeschlossen. Auf der Oberseite des Deckels 10.1 sind zwei Lageraufnahmen 18 angeordnet. Das Hebelelement 20 besitzt im rückwärtigen Bereich zwei Lagerungslaschen 23, über welche es zum einen in den Lageraufnahmen 18 gelagert ist und zum anderen mit einem in der Mitte eingeschlossenen Zwischenelement 30 gekoppelt ist.

Das Gehäuse 10 besitzt zudem einen hochgezogenen Trinkrand 11. Um den Bereich vorn, an dem die Lippen zum Trinken direkt angesetzt werden, vor Verschmutzungen zu schützen, läuft das Hebelelement 20 bei der dargestellten, bevorzugten Ausführungsform vollständig über den Trinkrand 11 hinweg nach unten. Im Endbereich 21 des Hebelelements 20 gibt es einen U-förmigen Querschnitt, der den Trinkrand 11 zwischen sich aufnimmt und damit innen und außen wie auch nach oben abschirmt. Eine vorspringende Kante außen am Endbereich 21 dient dazu, das Hebelelement 20 leichter greifen und hochschwenken zu können.

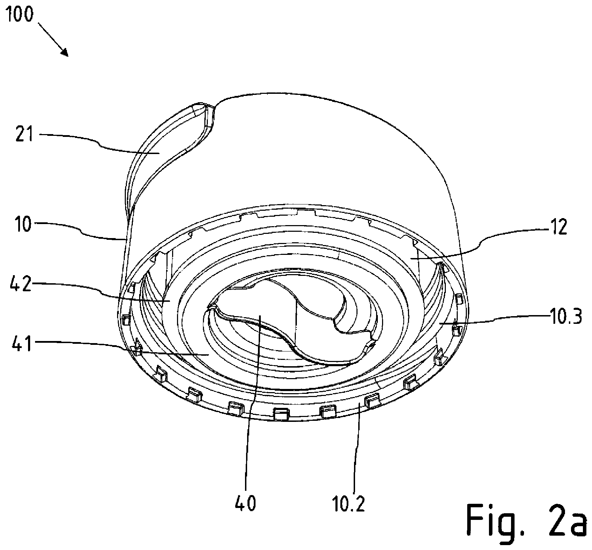

In Figur 2a ist der Trinkflaschenverschluss 100 in einer perspektivischen Ansicht von schräg unten dargestellt. Sichtbar ist dort die Auslaufraumwandung 12, welche in einen Flaschenhals hineinragt, wenn der Trinkflaschenverschluss 100 aufgeschraubt ist. Der Flaschenhals wird in dem Zwischenraum zwischen der Wandung 12 und dem Außenbereich des Gehäuses aufgenommen. Hierzu ist ein Innengewinde 10.3 ausgebildet, das mit einem Außengewinde am Flaschenhals zusammenwirkt. In der in Figur 2a dargestellten Schließstellung liegt ein Dichtungselement 40 mit seinem Dichtteller 41 und einem Dichtring 42 am unteren Rand der Auslaufraumwandung 12 an.

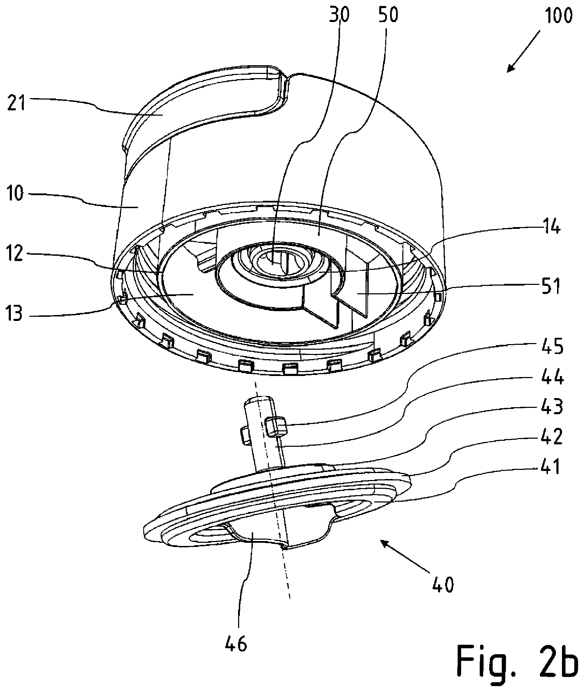

In Figur 2b ist das Dichtungselement 40 vom übrigen Trinkflaschenverschluss 100 abgenommen worden. Über einen Knebel 46 kann das Dichtungselement 40 gedreht werden, sodass radiale Vorsprünge 45 an einer Achse 44 aus der zugehörigen Bajonettaufnahme im Zwischenelement 30 ausrücken und das Dichtungselement 40 nach unten herausgezogen werden kann. Hierdurch ist der Trinkflaschenverschluss 100 gut zu reinigen.

An der Oberseite des Dichttellers 41, welche an ihrem Außenumfang den Dichtring 42 aufnimmt, ist ein erhabener Absatz 43 angeformt. Im Inneren des Gehäuses 10 sind die Auslaufraumwandung 12 und der von ihr umgebene Auslaufraum 13 erkennbar. Ganz innen ist der Schacht des Zwischenelements 30 sichtbar, der von der Luftkanalwandung 14 umgeben wird. Zwischen der Luftkanalwandung 14 und der Auslaufraumwandung 12 ist ein Schwallschutzelement 30 angeformt, das sich im Wesentlichen zylindrisch um die Luftkanalwandung 14 herumerstreckt, jedoch in einem rückwärtigen Bereich, welcher von der hier nicht sichtbaren Auslauföffnung abgewandt liegt, in Form eines Tunnels aus zwei parallelen Wänden 51 radial nach außen und bis an die Innenseite der Auslaufraumwandung 12 läuft. Erkennbar ist in Figur 2b außerdem, dass sich die Unterkante des Schwallschutzelements 50 tiefer nach unten erstreckt als die Luftkanalwandung 14.

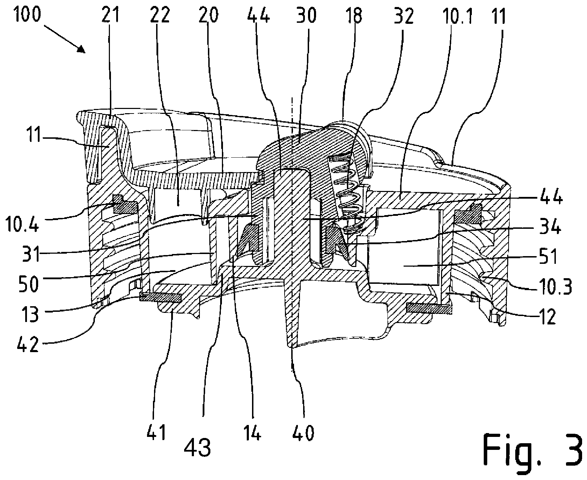

Figur 3 zeigt in einem Querschnitt entlang der Mittellinie des Hebelelements 20 den Trinkflaschenverschluss 100, und zwar in Schließstellung. Das Hebelelement 20 liegt vorne, das heißt, sein vorderes Ende 21 liegt auf der Trinkkante 11 auf und umfasst diese. Ein Vorsprung 22 an der Unterseite des Hebelelements 20 greift in die Auslauföffnung ein, die zwischen dem Schwallschutzelement 50 und der Auslaufraumwandung 12 angeordnet ist. Das Dichtungselement 40 liegt in Fig. 3 in seiner maximal angehobenen Stellung, sodass es mit seinem Dichtteller 41 den Dichtring 42 gegen die Unterkante der Auslaufraumwandung 12 presst. Das Dichtungselement 40 ist dabei formschlüssig mit dem Zwischenelement 30 gekoppelt. Um den Anpressdruck des Dichtrings 42 unabhängig von fertigungsbedingten oder temperaturbedingten Toleranzen ausreichend hoch zu halten, stützt sich bei der in Figur 3 dargestellten Ausführungsform das Zwischenelement 30 über eine Druckfeder 32 am Gehäuse 10 ab. In der Schließstellung sorgt die Feder 32 dafür, dass eventuelles Spiel, das in einer im Folgenden noch näher zu beschreibenden Exzenterverbindung zwischen dem Hebelelement 20 und dem Gehäuse 10 bestehen kann, kompensiert wird, und dass die Einheit aus Zwischenelement 30 und Dichtungselement 40 gegenüber dem Gehäuse 10 angehoben wird.

In dem äußeren Ringraum ist oberhalb des Innengewindes 10.3 eine Dichtung 10.4 vorgesehen, mit welcher der Oberrand des Flaschenhalses abgedichtet wird, wenn der Trinkflaschenverschluss 100 auf diesen aufgeschraubt ist.

Erfindungswesentlich sind die funktionalen Zusammenhänge im Inneren des Auslaufraums 13. Das Schwallschutzelement 50 schirmt den zentralen Bereich, in welchem die Achse 44 des Dichtungselements 40 und der Schaft 31 des Zwischenelements 30 geführt sind, vom flüssigkeitsdurchströmten Auslaufraum 13 ab, insbesondere vom Bereich der Ausgießöffnung, in welche der Vorsprung 22 des Hebelelements 20 eingreift. Rechts im Auslaufraum 13 ist eine der beiden parallelen Wände 51 des Tunnelfortsatzes des Schwallschutzelements 50 erkennbar.

Der Schaft 31 besitzt eine Innenringdichtung 34, die eine schräg nach unten angestellte äußere Dichtlippe besitzt, welche in der Schließstellung von innen gegen die Wandung des Luftkanals 14 drückt.

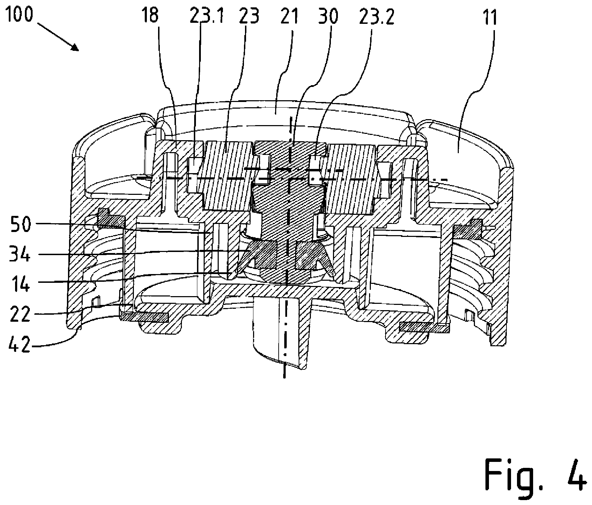

In Figur 4 ist die Schließstellung des Trinkflaschenverschlusses in einer im Vergleich zu Figur 3 um 90° gedrehten Schnittebene gezeigt.

Das Zwischenelement 30 besitzt in seinem oberen Bereich zwei gegenüberliegende Ausnehmungen, in die Exzenterzapfen 23.2 der Hebellaschen 23 des Hebelelements 20 eingreifen. Von den beiden Hebellaschen 23 aus erstreckt sich außerdem jeweils ein zentral angeordneter Lagerzapfen 23.1, der in eine der beiden Lageraufnahmen 18 an der Oberseite des Gehäuses 10 eingreift. Dadurch, dass die Rotationsachse der Lagerzapfen 23.1 gegenüber der Achse der Exzenterzapfen 23.2 versetzt ist, ergibt sich eine Hubbewegung des Zwischenelements 30, wenn das Hebelelement 20 umgelegt wird und dabei um die Lagerzapfen 23.1 geschwenkt wird.

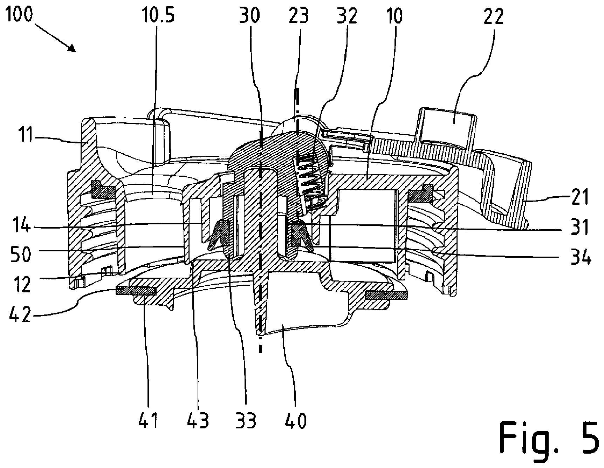

In Figur 5 ist analog zur Darstellung in Figur 3 ein Querschnitt entlang der Mittelachse des Hebelelements 20 dargestellt, wobei sich der Trinkflaschenverschluss 100 in Schließstellung befindet. Das Hebelelement 20 ist um nahezu 180 Grad zur rückwärtigen Seite des Gehäuses 10 geschwenkt. Der Abstand zwischen den beiden strichpunktierten Linien zeigt, dass die Lagerung des Hebelelements 20 etwas versetzt gegenüber der Zentrumsachse des Gehäuses 10 und des Luftkanals 14 liegt. Hierdurch steht mehr Fläche im Bereich der Ausgießöffnung 10.5 zur Verfügung, sodass diese entsprechend größer gestaltet werden kann. Außerdem kann der U-förmige Endbereich 21 des Hebelelements 20 in umgelegter Stellung vollständig außerhalb des Außenumfangs des Gehäuses 10 positioniert werden, sodass das Hebelelement 20 flach auf dem Gehäuserand abgelegt werden kann und beim Trinken nicht störend wirkt.

Die Feder 32 ist in dieser Stellung komprimiert, da das Zwischenelement 30 über das Hebelelement 20 in eine abgesenkte, selbsthemmende Zwangsstellung gedrückt worden ist. Die Spitze des Innendichtungselements 31 liegt außerhalb des Luftkanals 14. Der Unterrand des Schwallschutzelements 50 und der Absatz 43 an dem Dichtteller 41 liegen sehr nahe beieinander und bilden eine Flüssigkeitssperre, wenngleich Luft durch diese Engstelle hindurchströmen kann. Auf der gegenüberliegenden, in Figur 5 rechten Seite besteht hingegen kein enger Spalt am Absatz 43, da dort der radiale Tunnel 51 des Schwallschutzelements 50 verläuft. Über diesen Weg kann Luft ungehindert in den Innenraum der Trinkflasche strömen, auch wenn diese mit der Ausgießöffnung 10.5 nach unten geneigt ist, um daraus trinken zu können.

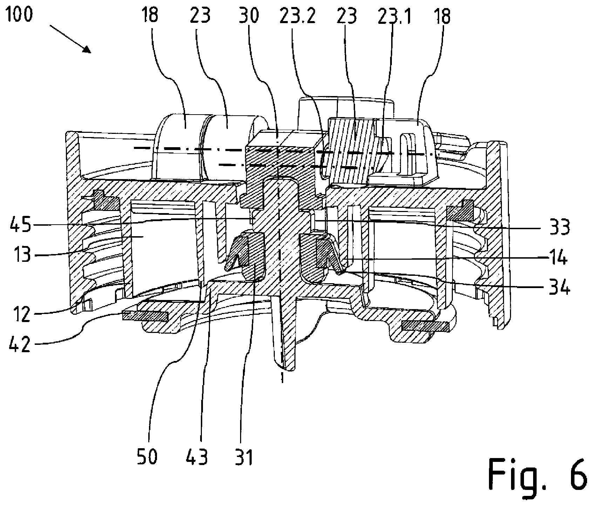

In Figur 6 ist die Öffnungsstellung gemäß Figur 5 noch einmal in einer um 90° versetzten Querschnittsebene dargestellt, ähnlich zu Figur 4. Die Exzenterzapfen 23.2 liegen nun unterhalb der Mittelachse, welche durch die Lagerzapfen 23.1 führt, wodurch das Zwischenelement 30 und das damit gekoppelte Dichtungselement 40 nach unten gedrückt sind. Das Dichtungselement 40 greift mit seinen radialen Vorsprüngen 45 in entsprechende Ausnehmungen 33 im Schaft 31 des Zwischenelements 30.

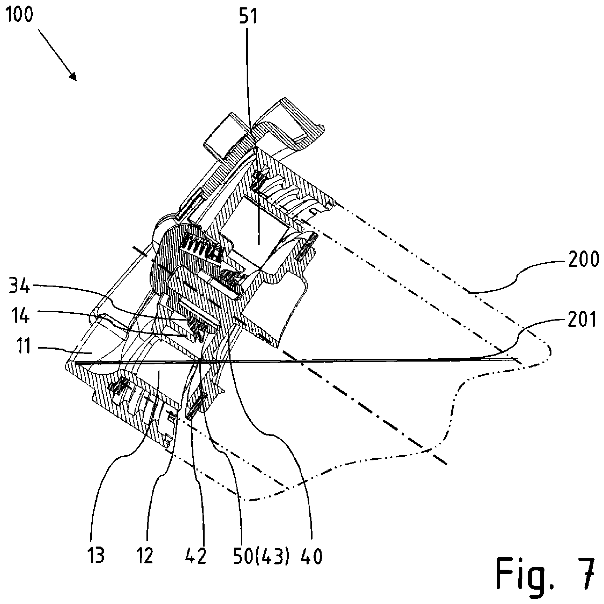

Figur 7 zeigt einen Trinkflaschenverschluss 100, der mit einer Trinkflasche 200 verschraubt ist. Beide zusammen sind geneigt gehalten. Der Trinkflaschenverschluss 100 ist geöffnet. Die Dichtlippe des Dichtrings 42 ist von der unteren Kante der Wandung 12 abgehoben. In der Trinkflasche 200 befindet sich eine größere Flüssigkeitsmenge, wie durch den Flüssigkeitsspiegel 201 markiert. Der Flüssigkeitsspiegel 201 kann sich durch den Auslaufraum 13 bis zur Trinkkante 11 an der Außenseite erstrecken. Gerät die Flüssigkeit in Bewegung, wird sie dort, wo der Absatz 43 des Dichttellers 40 an dem Schwallschutzelement 50 anliegt, aufgehalten oder zumindest stark gebremst. Ein Eindringen von Flüssigkeit in den Tunnel 51 ist hingegen nahezu ausgeschlossen, denn dazu müsste die Flüssigkeit an dem oben liegenden Teil der Flaschenwand über den Dichtring 43 hinweg laufen. Aber selbst in dem Fall wird durch die Innenringdichtung 34 und die Luftkanalwandung 14 eine weitere Labyrinthsperre gebildet. Die Innenringdichtung 34 wird mit dem Schließen des Trinkflaschenverschlusses 100 in die Luftkanalwandung 14 zurückgezogen. Sollte aus irgendwelchen Gründen doch Flüssigkeit bis ins Innere des Schwallschutzelements 50 gelangt sein, so verhindert die Abdichtung des Luftkanals, dass diese Flüssigkeitsreste bei geschlossenem Trinkflaschenverschluss 100 nach außen gelangen können.

## Patentansprüche

1. Trinkflaschenverschluss (100) für eine Isolierflasche, wenigstens umfassend:
- ein Gehäuse (10), das mit einem Flaschenhals zu verbinden ist, das eine Auslaufraumwandung (12) aufweist, die einen Auslaufraum (13) umgibt, und das einen den Auslaufraum (19) nach oben begrenzenden Deckel (10.1) mit wenigstens einer Ausgießöffnung (10.5) besitzt;
- ein Hebelelement (20), das in einer Schließstellung die Ausgießöffnung (10.5) verschließt und das am Gehäuse (10) schwenkbeweglich gelagert ist,
- ein Zwischenelement (30), das formschlüssig mit dem Hebelelement (20) gekoppelt ist und in einem von einer Luftkanalwandung (14) begrenzten Luftkanal im Zentrum des Gehäuses (10) axial verschiebbar geführt ist;
- ein Dichtungselement (40), das einen Dichtteller (41) aufweist, der mit dem Zwischenelement (30) verbunden ist und der in der Schließstellung an der Auslaufraumwandung (12) anliegt;
**dadurch gekennzeichnet,**
- **dass** die Luftkanalwandung (14) von einem innerhalb des Auslaufraums (19) angeordneten Schwallschutzelement (50) umgeben ist, das sich in einem der Ausgießöffnung (10.5) gegenüberliegenden Bereich in einem Tunnel (51) fortsetzt, der sich bis an die Auslaufraumwandung (12) erstreckt und
- **dass** der Dichtteller (41) an seiner Oberseite wenigstens einen Absatz (43) aufweist, der in einer Schließstellung in das Schwallschutzelement (50) eingreift oder dieses überdeckt.

2. Trinkflaschenverschluss (100) nach Anspruch 1, **dadurch gekennzeichnet, dass** in der Schließstellung ein Schaft (31) des Zwischenelements (30) über eine Innendichtung (32) gegenüber der Luftkanalwandung (14) abgedichtet ist und dass in einer Öffnungsstellung eine Verbindung zwischen dem Luftkanal und dem Auslaufraum (13) hergestellt ist.

3. Trinkflaschenverschluss (100) nach Anspruch 2, **dadurch gekennzeichnet, dass** die Innendichtung (32) eine schräg angestellte Dichtlippe aufweist, die sich vom Schaft (31) aus nach unten, in Richtung des Dichttellers (41), bis an die Luftkanalwandung (14) erstreckt.

4. Trinkflaschenverschluss (100) nach einem der vorhergehenden Ansprüche, **dadurch gekennzeichnet, dass** das Hebelelement (20) mit wenigstens einem Lagerzapfen (23.1) in einer Lageraufnahme (18) schwenkbeweglich am Gehäuse (10) gelagert ist.

5. Trinkflaschenverschluss (100) nach Anspruch 4, **dadurch gekennzeichnet, dass** das Hebelelement (20) wenigstens einen zum Lagerzapfen (23.1) koaxial versetzt angeordneten Exzenterzapfen (23.2) aufweist, und dass das Zwischenelement (30) über den Exzenterzapfen (23.2) formschlüssig mit dem Hebelelement (20) gekoppelt ist.

6. Trinkflaschenverschluss (100) nach Anspruch 5, **dadurch gekennzeichnet, dass** das Hebelelement (20) endseitig zwei beabstandete Lagerlaschen (23) aufweist, zwischen denen das Zwischenelement (30) eingeschlossen ist, wobei jede Lagerlasche (23) je einen nach außen weisenden Lagerzapfen (23.1) und einen nach innen weisenden Exzenterzapfen (23.2) aufweist.

7. Trinkflaschenverschluss (100) nach einem der vorhergehenden Ansprüche, **dadurch gekennzeichnet, dass** das Zwischenelement (30) und das Dichtungselement (40) lösbar miteinander verbunden sind.

8. Trinkflaschenverschluss (100) nach Anspruch 7, **dadurch gekennzeichnet, dass** an einer Achse (44) des Dichtungselements (40) wenigstens zwei radial nach außen weisenden Vorsprünge (45) ausgebildet sind, die mit Ausnehmungen (33) im Schaft (31) des Zwischenelements (30) eine Bajonettverbindung ausbilden.

9. Trinkflaschenverschluss (100) nach einem der vorhergehenden Ansprüche, **dadurch gekennzeichnet, dass** am Hebelelement (20) eine Ringwandung (22) oder eine vorspringende Dichtplatte angeformt ist, die in der Schließstellung in die Ausgießöffnung (10.5) eingreift und diese verschließt.

10. Trinkflaschenverschluss (100) nach einem der vorhergehenden Ansprüche, **dadurch gekennzeichnet, dass** das Ende des Hebelelements (20) eine Trinkkante (11) am Gehäuse (10) zumindest nach außen und nach oben abdeckt.

11. Trinkflaschenverschluss (100) nach Anspruch 10, **dadurch gekennzeichnet, dass** sich das Hebelelement (20) flach über den Bereich des Deckels (10.1) und der Ausgießöffnung (10.5) hinweg erstreckt, an der Innenseite der Trinkkante (11) aufsteigt und an deren Außenseite wieder abfällt.

12. Trinkflaschenverschluss (100) nach einem der Ansprüche 4 bis 11, **dadurch gekennzeichnet, dass** die durch die Lagerzapfen (23.1) definierte Lagerachse versetzt zum Zentrum des Gehäuses (10) auf der von der Ausgießöffnung (10.5) abgewandten Seite des Zentrums angeordnet ist.

## Claims

1. Drinking bottle closure (100) for an insulated bottle, at least including:
- a housing (10) which is to be connected with a bottle neck which has an outlet chamber wall (12) which surrounds an outlet chamber (13), and which has a lid (10.1), delimiting the outlet chamber (19) upwardly, having at least one pouring opening (10.5);
- a lever element (20) which in a closed position closes the pouring opening (10.5) and which is mounted on the housing (10) such as to be pivotably movable;
- an interim element (30) which is coupled in a form-fitting manner with the lever element (20) and is guided in an axially displaceable manner in an air channel, delimited by an air channel wall (14), in the centre of the housing (10);
- a sealing element (40) which has a sealing plate (41) which is connected with the interim element (30) and which in the closed position rests on the outlet chamber wall (12);
**characterised in**
- **that** the air channel wall (14) is surrounded by a surge protection element (50) arranged within the outlet chamber (19), which surge protection element is continued in a tunnel (51) in a region situated opposite the pouring opening (10.5), which tunnel extends as far as the outlet chamber wall (12) and
- **that** the sealing plate (41) has on its top side at least one shoulder (43) which in a closed position engages in the surge protection element (50) or covers it.

2. Drinking bottle closure (100) according to claim 1, **characterised in that** in the closed position a shaft (31) of the interim element (30) is sealed by way of an inner seal (32) against the air channel wall (14) and that in an open position a connection is created between the air channel and the outlet chamber (13).

3. Drinking bottle closure (100) according to claim 2, **characterised in that** the inner seal (32) has a sealing lip set at an angle which extends from the shaft (31) downwardly in the direction of the sealing plate (41) as far as the air channel wall (14).

4. Drinking bottle closure (100) according to any of the preceding claims, **characterised in that** the lever element (20) is mounted with at least one bearing pin (23.1) in a bearing reception (18) on the housing (10) in a manner such as to be pivotably movable.

5. Drinking bottle closure (100) according to claim 4, **characterised in that** the lever element (20) has at least one eccentric pin (23.2) arranged coaxially offset to the bearing pin (23.1), and that the interim element (30) is coupled via the eccentric pin (23.2) in a form-fitting manner with the lever element (20).

6. Drinking bottle closure (100) according to claim 5, **characterised in that** the lever element (20) has on its end side two bearing tabs (23) distanced from one another, between which is enclosed the interim element (30), wherein each bearing tab (23) has in each case a bearing pin (23.1) pointing to the outside and an eccentric pin (23.2) pointing to the inside.

7. Drinking bottle closure (100) according to any of the preceding claims, **characterised in that** the interim element (30) and the sealing element (40) are releasably connected with one another.

8. Drinking bottle closure (100) according to claim 7, **characterised in that** on an axis (44) of the sealing element (40) are formed at least two projections (45) pointing radially to the outside, which form a bayonet connection with recesses (33) in the shaft (31) of the interim element (30).

9. Drinking bottle closure (100) according to any of the preceding claims, **characterised in that** on the lever element (20) is formed an annular wall (22) or a protruding sealing plate, which in the closed position engages in the pouring opening (10.5) and closes it.

10. Drinking bottle closure (100) according to any of the preceding claims, **characterised in that** the end of the lever element (20) covers a drinking rim (11) on the housing (10) at least to the outside and upwardly.

11. Drinking bottle closure (100) according to claim 10, **characterised in that** the lever element (20) extends flatly over the region of the lid (10.1) and of the pouring opening (10.5), rises on the inner side of the drinking rim (11) and sinks again at its outer side.

12. Drinking bottle closure (100) according to any of claims 4 to 11, **characterised in that** the bearing axis defined by the bearing pin (23.1) is arranged offset to the centre of the housing (10) on the side, facing away from the pouring opening (10.5), of the centre.

## Revendications

1. Fermeture de gourde (100) pour une bouteille isolante, comprenant au moins :
- un boîtier (10) qui doit être connecté à un goulot de bouteille, qui présente une paroi d'espace de sortie (12), qui entoure un espace de sortie (13), et qui comporte un couvercle (10.1) délimitant vers le haut l'espace de sortie (19) avec au moins une ouverture de versement (10.5) ; un élément de levier (20) qui, en position de fermeture, ferme l'ouverture de versement (10.5) et qui est monté de manière pivotante sur le boîtier (10),
- un élément intermédiaire (30), qui est couplé par complémentarité de forme à l'élément de levier (20) et qui est guidé de manière déplaçable axialement dans un conduit d'air délimité par une paroi de conduit d'air (14) au centre du boîtier (10) ;
- un élément d'étanchéité (40) qui présente un disque d'étanchéité (41) connecté à l'élément intermédiaire (30) et qui, en position de fermeture, repose contre la paroi d'espace de sortie (12) ;
**caractérisée en ce**
- **que** la paroi de conduit d'air (14) est entourée d'un élément de protection d'écoulement (50) disposé à l'intérieur de l'espace de sortie (19) et qui, dans une zone opposée à l'ouverture de versement (10.5), se prolonge dans un tunnel (51) qui s'étend jusqu'à la paroi d'espace de sortie (12), et
- **que** le disque d'étanchéité (41) présente sur son côté supérieur au moins un épaulement (43) qui, en position de fermeture, s'engage dans l'élément de protection d'écoulement (50) ou recouvre celui-ci.

2. Fermeture de gourde (100) selon la revendication 1, **caractérisée en ce que**, en position de fermeture, une tige (31) de l'élément intermédiaire (30) est étanchéifiée par rapport à la paroi de conduit d'air (14) au moyen d'un joint intérieur (32) et **en ce que**, en position d'ouverture, une connexion est établie entre le conduit d'air et l'espace de sortie (13).

3. Fermeture de gourde (100) selon la revendication 2, **caractérisée en ce que** le joint intérieur (32) présente une lèvre d'étanchéité placée en biais, qui s'étend de la tige (31) vers le bas, en direction du disque d'étanchéité (41), jusqu'à la paroi de conduit d'air (14).

4. Fermeture de gourde (100) selon l'une quelconque des revendications précédentes, **caractérisée en ce que** l'élément de levier (20) est monté sur le boîtier (10) avec au moins un tourillon de palier (23.1) dans un logement de palier (18) de manière pivotante.

5. Fermeture de gourde (100) selon la revendication 4, **caractérisée en ce que** l'élément de levier (20) présente au moins un tourillon excentrique (23.2) disposé de manière décalée coaxialement par rapport au tourillon de palier (23.1) et **en ce que** l'élément intermédiaire (30) est couplé par complémentarité de forme à l'élément de levier (20) par l'intermédiaire du tourillon excentrique (23.2).

6. Fermeture de gourde (100) selon la revendication 5, **caractérisée en ce que** l'élément de levier (20) présente à l'extrémité deux pattes de palier (23) espacées entre lesquelles l'élément intermédiaire (30) est enfermé, dans lequel chaque patte de palier (23) présente un tourillon de palier (23.1) tourné vers l'extérieur et un tourillon excentrique (23.2) tourné vers l'intérieur.

7. Fermeture de gourde (100) selon l'une quelconque des revendications précédentes, **caractérisée en ce que** l'élément intermédiaire (30) et l'élément d'étanchéité (40) sont connectés entre eux de manière amovible.

8. Fermeture de gourde (100) selon la revendication 7, **caractérisée en ce qu'**au moins deux saillies (45) dirigées radialement vers l'extérieur sont formées sur un axe (44) de l'élément d'étanchéité (40), qui forment une connexion à baïonnette avec des évidements (33) dans la tige (31) de l'élément intermédiaire (30).

9. Fermeture de gourde (100) selon l'une quelconque des revendications précédentes, **caractérisée en ce qu'**une paroi annulaire (22) ou une plaque d'étanchéité en saillie est formée sur l'élément de levier (20) qui, en position de fermeture, s'engage dans l'ouverture de versement (10.5) et ferme celle-ci.

10. Fermeture de gourde (100) selon l'une quelconque des revendications précédentes, **caractérisée en ce que** l'extrémité de l'élément de levier (20) recouvre au moins vers l'extérieur et vers le haut un bec (11) sur le boîtier (10).

11. Fermeture de gourde (100) selon la revendication 10, **caractérisée en ce que** l'élément de levier (20) s'étend à plat sur la zone du couvercle (10.1) et de l'ouverture de versement (10.5), monte sur le côté intérieur du bec (11) et retombe sur le côté extérieur de celui-ci.

12. Fermeture de gourde (100) selon l'une quelconque des revendications 4 à 11, **caractérisée en ce que** l'axe de palier défini par les tourillons de palier (23.1) est disposé de manière décalée par rapport au centre du boîtier (10) sur le côté du centre opposé à l'ouverture de versement (10.5).
